# FASCICULE DE BREVET EUROPEEN

(11) **EP 3 021 507 B1**
(45) Date de publication et mention de la délivrance du brevet: **23.12.2020**
(21) Numéro de dépôt: 15194675.3
(22) Date de dépôt: 16.11.2015
(51) Int. Cl.: H04L 29/06, H04W 12/12, H04B 1/00, H04W 4/021, H04W 84/18, H04K 3/00

(54) **ARCHITECTURE SYSTÈME POUR LA GESTION DE RESSOURCES DANS UN RÉSEAU DE COMMUNICATION**
SYSTEMARCHITEKTUR FÜR DIE VERWALTUNG VON RESSOURCEN IN EINEM KOMMUNIKATIONSNETZ
SYSTEM ARCHITECTURE FOR MANAGING RESOURCES IN A COMMUNICATION NETWORK

(30) Priorité: 14.11.2014 FR 1402559
(43) Date de publication de la demande: 18.05.2016
(73) Titulaire: THALES, 92400 Courbevoie (FR)
(72) Inventeur: FRANCK, Bertrand, 92622 Gennevilliers Cedex (FR); MEREL, Dominique, 92622 Gennevilliers Cedex (FR)
(74) Mandataire: Marks & Clerk France

(56) Documents cités:
- GB-A- 2 061 671
- US-A1- 2011 086 614
- US-A1- 2011 183 602

## Description

L'invention concerne une architecture système pour la gestion des ressources dans un réseau de communication de type ad-hoc, destiné à la conduite d'opérations militaires ou de sécurité tactiques et mobiles (voix, données de commandement ou de reporting), comprenant des radios de capacités « 3 en 1 » définies ci-après.

Un équipement de radiocommunication, intégrant des capacités multifonctions « 2 en 1 » ou « 3 en 1 », répartit l'ensemble des ressources temps et fréquences qui lui sont allouées entre différents services programmés de façon logicielle notamment :
1) pour sa fonction principale des services de communications (voix, données, messagerie opérationnelle, alertes, SMS,..),
2) pour des services supplémentaires à la fonction principale 1), dits « 2 en 1 » dérivés des capacités de réception/écoute de la radio comme des services d'écoute, de surveillance, d'enregistrements de voies I/Q, de localisation, de veille cyclique de canaux, d'études de spectre,
3) pour des services supplémentaires à la fonction principale 1), dits « 2 en 1 », ou supplémentaires aux services décrits en 2), dits « 3 en 1 » dérivés des capacités de l'émission de la radio comme les services permettant de perturber les signaux et les radiocommunications à proximité.

Par la suite, pour des raisons de simplicité, on appellera « 3 en 1 » les services supplémentaires rajoutés globalement à la fonction classique 1) des postes radio, que ce soient des services de mesures électroniques ESM (Electronic Support Measures), de perturbation de signaux, ou d'écoute/surveillance/localisation, ou encore de gestion de spectre connue sous l'abréviation anglo-saxonne DSM (Dynamic Spectrum Management).

Dans les systèmes connus de l'art antérieur utilisés pour écouter, surveiller, intercepter et localiser des émetteurs, les moyens de détection de signaux permettant ces fonctions sont des moyens dédiés en nombre limité. Ces moyens sont en général dédiés à une tâche ou à une fonction d'écoute/surveillance ou de perturbation et sont positionnés de facto à des emplacements convenus, dépendant de l'application. Ils ne sont pas toujours bien orientés au niveau de leurs antennes de réception et de leur position ou emplacement, par rapport au dispositif ou à l'événement à détecter. Par exemple, ils peuvent disposer d'une ouverture angulaire qui n'est pas adéquate pour obtenir une localisation de qualité, ou ils peuvent ne pas être positionnés à proximité géographique des émetteurs d'intérêts considérés. Les moyens mis en œuvre dans de tels systèmes nécessitent souvent l'installation de coffrets complémentaires, conduisant à des coûts d'intégration, de câblage, d'encombrement, de poids, de consommation électrique, qui réduisent notablement la mobilité des unités équipées (déploiement de mâts d'antenne pour les émetteurs-récepteurs radios, détermination de cap ou de directions des antennes, câbles à installer entre coffrets et antennes). Les équipements étant dédiés à des traitements spécifiques, ils offrent en général des résultats optimisés pour ces traitements, mais ne sont pas forcément réutilisables pour d'autres applications.

Parmi les inconvénients de l'art antérieur, on peut mentionner, un positionnement de dispositif pas forcément adapté aux cibles en l'absence de connaissances préalables de l'environnement (i.e., émetteurs d'intérêts...), un manque de flexibilité, et des difficultés à repositionner rapidement un ou plusieurs des éléments lorsqu'ils sont en cours de fonctionnement et dédiés à une fonction, la présence d'antennes et de mâts supports nécessitant un réglage. A contrario, les équipements « 3 en 1 » peuvent supporter des services rapidement reconfigurés, notamment grâce à la capacité SDR (Software Defined Radio) des radios en réseau de communication.

La demande de brevet US 2011/0086614 résout_un problème d'accès radio avec une infrastructure cellulaire déterminée et n'évoque pas l'utilisation de fonctions « 3 en 1 » telles que définies ci-dessus.

La demande de brevet GB 2 061 671 décrit un système classique avec un réseau de communication entre capteurs et station de commande, entièrement dédié à une fonction qui cherche à définir la meilleure stratégie pour perturber les communications dans un système qui peut comporter des radios militaires. Le contrôle se fait au niveau du choix d'un canal de communication en fonction d'un ordre donné. L'utilisation de module « 3 en 1 » n'est pas évoquée dans ce document et l'unique problème traité est la gestion et le changement rapide des canaux de fréquence.

La demande de brevet US 2011/183602 décrit un appareil de brouillage avec une gestion dynamique du brouillage.

L'un des objectifs de la présente invention est d'offrir une architecture système permettant une flexibilité dans l'utilisation des ressources du système, dans le positionnement des ressources, des tâches à accomplir, selon des besoins exprimés par un utilisateur.

L'invention concerne un réseau de radios logicielles programmées capables d'activer des modules logiciels pouvant doter une radio de services supplémentaires au service principal de communication de commandement tactique, toujours actifs. Ces modules logiciels seront activés sur les radios du réseau les plus pertinentes pour le service considéré, (par exemple la proximité de la menace, ou optimisation des bandes passantes du réseau de communication pour une qualité de service requise). Plusieurs modules peuvent être invoqués en parallèle pour assurer différents services entrelacés (en temps et en répartition géographique). Un des modules logiciels est le chef d'orchestre pour l'entrelacement des différents services, en fonction d'objectifs à atteindre.

La présente invention est définie par l'objet de la revendication indépendante.

Selon un mode de réalisation, un module routeur-radio comporte, par exemple, plusieurs modules fonctionnels, un module d'adaptation/transmission, un module de fiabilisation, un module d'acheminement des données, un module de routage, un module de gestion locale recevant des données à mémoriser puis à acheminer selon des critères et des contraintes vers le dispositif maître pour traitement des données.

Le module d'écoute et de surveillance comporte, par exemple, un module de radio communication supportant les radiocommunications, un module adapté à écouter, surveiller et intercepter les signaux radios de l'environnement et à les enregistrer localement dans une base de données, un module adapté à perturber des communications non autorisées, un module de gestion locale recevant les ordres émis par le dispositif maître, le module de gestion étant adapté à piloter les différents modules de l'équipement radio.

Le dispositif maître peut comporter:
- une base de données comprenant des informations ou données de contraintes techniques et opérationnelles,
- une base de données contenant des données géographiques de répartition des zones d'intérêts,
- une base de données « spectres d'intérêt »,
- une base de données contenant des données géographiques sur des positions géographiques de récepteurs,
- une base de données contenant les topologies de réseaux de communication,
- une base de données d'état des flux d'échanges,
- un module de communication avec les équipements radio du système.

Pour déterminer une architecture système, on détermine, par exemple, un coefficient K tel que la performance du système Perf_{déploiementsyst} obtenue par le déploiement de plusieurs équipements (pour chaque équipement on a une performance Perf_{équipement}) est telle que Perf_{déploiementsyst}=K.Perf_{équipement} avec K associé à une stratégie de sélection des équipements en fonction d'un besoin opérationnel, détection d'équipements, localisation, perturbation du fonctionnement d'un dispositif.

L'architecture système peut comporter plusieurs réseaux de transmissions mis en réseau par des nœuds assurant des fonctions de routage, transfert, et d'adaptation technique aux réseaux radio particuliers.

Selon un mode de réalisation, un équipement radio comporte, par exemple, une horloge locale et les horloges locales des équipements présents dans le système sont mises en réseau afin de converger vers un temps système.

D'autres caractéristiques et avantages de la présente invention apparaîtront mieux à la lecture de la description donnée à titre illustratif et nullement limitatif annexé des figures qui représentent:
- La figure 1, un exemple d'architecture de déploiement spatial selon l'invention,
- La figure 2, une représentation des canaux logiques constituant les ressources orthogonales en temps et en fréquences d'un ensemble d'équipements radio supportant différents services 3 en 1 et une matrice temps-fréquence correspondante,
- La figure 3, une architecture fonctionnelle d'un composant de gestion, sachant que des composants ou agents distribués sont localisés dans toutes les radios constituant le système selon l'invention, et
- La figure 4, un exemple de modules présents dans une station maître du réseau.

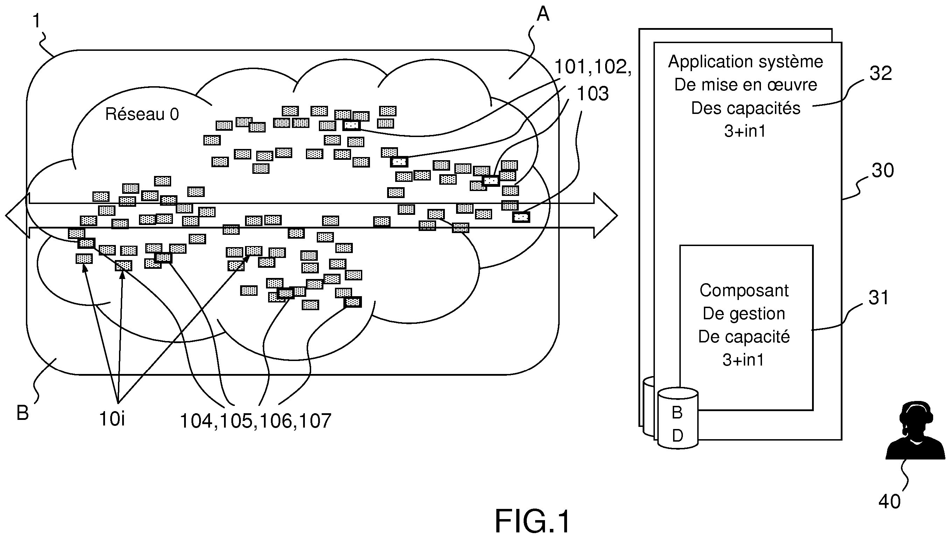

La figure 1 schématise un exemple d'architecture système de déploiement spatial selon l'invention pour une application ad-hoc militaire ou de sécurité. Un réseau de transmission 1 est composé de plusieurs équipements radio 10i interopérables, travaillant avec un même plan de fréquences, des lois de sauts de fréquences identiques, des équipements de chiffrement identiques éventuellement, un même protocole radio. Les équipements radio 10i sont notamment gérés par un dispositif maître 30 comme il va être décrit ci-après. Une fraction des ressources des équipements radio attribuées aux services «3 en 1 » est gérée par le dispositif maître. L'autre fraction correspondant aux ressources pour les services de radiocommunications continue à être gérée par un système dédié de gestion des capacités radios, colocalisé ou non et en interaction rapide ou non avec le dispositif maître « 3 en 1 ».

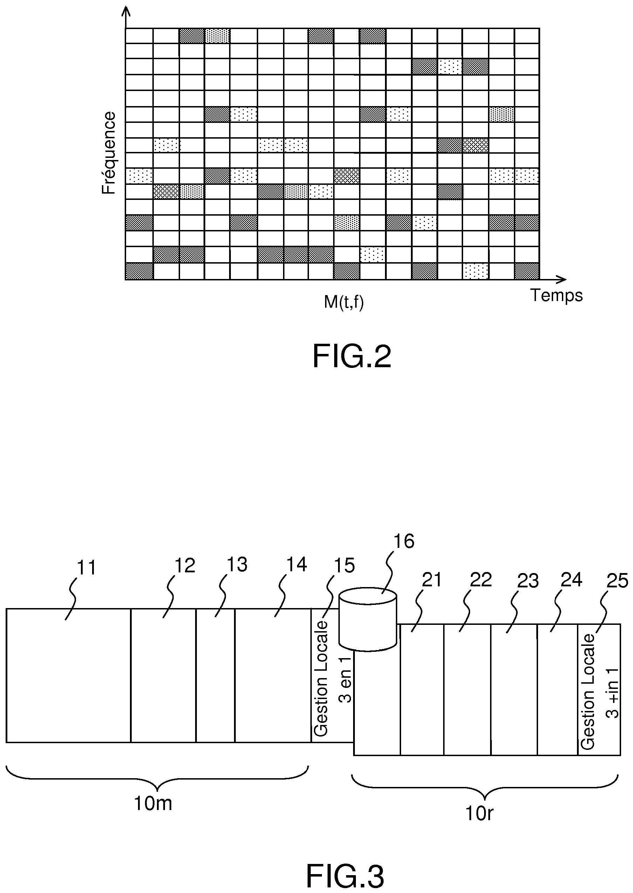

Le dispositif maître 30 (FIG.1) comprend, par exemple, un premier module 31 de gestion de capacité des équipements radio «3 en 1» qui permet de surveiller, contrôler, télémesurer et programmer les fonctionnalités «3 en 1» d'un équipement radio via un module 15 (FIG. 3) de gestion présent dans chaque équipement radio programmé de façon logicielle, un module applicatif 32 (FIG.1) adapté à la mise en œuvre des capacités radio « 3 en 1 » qui permet de sélectionner les équipements radios dotés de capacité « 3 en 1 » les plus appropriés, par exemple, la proximité géographique des cibles recherchées, la disponibilité des ressources, la meilleure topologie en fonction de la fonction à réaliser etc., tout en évitant d'impacter les opérations déjà en cours (communications radio, autres services « 3 en 1 » déjà lancés) et en optimisant la performance du système, par exemple, le lancement d'opérations en parallèle sur le réseau, minimisant la durée d'opération par l'ensemble des équipements radios dotés de capacité 3 en1. Le dispositif maître 30 sélectionne les ressources les plus appropriées au niveau des équipements radio et les programme de façon transparente et selon les besoins d'une application. Le dispositif maître 30 est programmé par un opérateur 40, par exemple.

Sur la figure 2 on a représenté des canaux logiques supportant différents services 3 en 1, et une matrice M(t, f) temps-fréquences correspondante constituant des canaux logiques, la matrice permettant de suivre l'évolution du contenu spectral au cours du temps. Les canaux sont schématisés par des traits ou pointillés différents sur la figure.

La figure 3 est un schéma fonctionnel des éléments participant au système selon l'invention.

Un équipement radio « 3 en 1 » (FIG.3) comporte, par exemple, au moins les deux modules suivants : un premier module logiciel adapté à assurer la mission principale de radio communication qui supporte les échanges sur la chaîne de commandement, tels que la voix, les données de commandement, un deuxième module logiciel adapté à écouter, surveiller, intercepter les signaux radios de l'environnement et à les enregistrer.

L'équipement radio 10i comprend par exemple un premier module logiciel fonctionnel d'écoute et de surveillance 10m comportant un premier module radio Emetteur/Récepteur, 11 qui supporte les radiocommunications (voix, données, messagerie, alertes, sms etc.), un module logiciel 12 ou 14 comprenant un ensemble de ressources, telles que, par exemple, une capacité d'écoute et surveillance, et d'interception de signaux radios de l'environnement, un module 13 adapté à perturber des communications non autorisées ou des signaux, lesdits modules vont être gérés par le module de gestion 15 qui reçoit des ordres du dispositif maître 30, une base de données 16 pour mémoriser les informations. Le module de gestion 15 gère, d'une part, les radiocommunications habituelles supportées par ce type d'équipement (voix, données, messagerie, alertes, SMS, etc.), et d'autre part les ressources locales allouées aux services complémentaires mis en œuvre.

Un équipement radio comprend aussi un deuxième module 10r, ou module routeur-radio adapté à mémoriser des données, à assurer le routage, le transfert et la fiabilisation des données entre les interfaces du réseau radio selon un ensemble de règles. Ce module a notamment pour fonction d'acheminer les données et les ordres de programmation entre le dispositif maître et les équipements radio «3 en 1 ». Il est constitué de plusieurs modules fonctionnels; un module d'adaptation/transmission 21, un module de fiabilisation 22, un module d'acheminement des données 23, un module de routage 24, un module de gestion locale « 3 en 1 », 25, recevant des données à mémoriser, puis à acheminer selon des critères et des contraintes vers le dispositif maître pour traitement des données. Les critères et contraintes d'acheminement sont destinés à optimiser, fluidifier et paralléliser les différents échanges de données au sein du système en minimisant l'impact des services « 3 en 1 » additionnels sur les radiocommunications habituelles (entre usagers) du réseau radio.

Par exemple, sur la figure 1, les équipements radios 101, 102, 103 sont gérés par le dispositif maître 30 pour surveiller une zone d'intérêt A et les équipements radios 104, 105, 106, 107, pour surveiller une deuxième zone d'intérêt B.

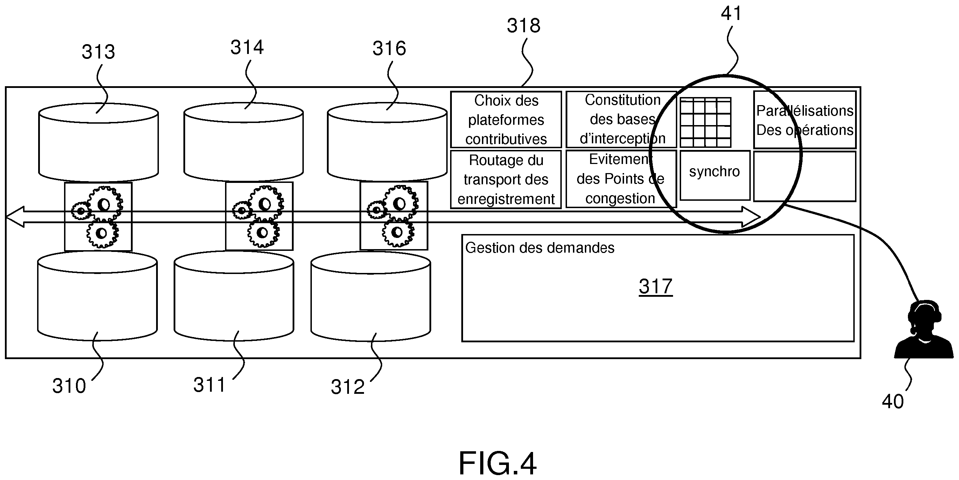

Le module maître 30 possède les éléments suivants, figure 4 :
- une base de données 310 comprenant des informations ou données de contraintes techniques et opérationnelles,
- une base de données 311 contenant des données géographiques de répartition des zones d'intérêts,
- une base de données « spectres d'intérêt », 312,
- une base de données contenant des données géographiques sur des positions géographiques de récepteurs, 313,
- une base de données contenant les topologies de réseaux de communication, 314,
- une base de données d'état des flux d'échanges, 316,
- un algorithme de gestion des équipements, 317,
- un module de communication avec les équipements radio « 3 en 1 » du système, 318.

Un opérateur 40 introduit les contraintes fonctionnelles du système à un instant donné, au moyen d'une interface homme machine, 41.

L'algorithme de gestion des équipements 317 est adapté à la gestion des demandes, par exemple, le référencement des unités équipées 3 en 1, les besoins en échanges (Communications), les besoins en fonctions (localisation, perturbation de signaux non autorisés, etc.), la surveillance des taux d'activité des unités. La programmation des moyens du système permettra notamment le choix des plateformes contributives du système, le routage du transport des enregistrements, la constitution des bases d'interception, éviter des points de congestion dans le système, la parallélisation des opérations.

Le dispositif maître présente notamment les fonctionnalités suivantes:
- une garantie sur la qualité de service sur les communications opérationnelles (voix, données, messages, alertes, SMS etc),
- une gestion et une mise à la disposition en temps réel de nouveaux services « 3 en 1 » en gérant les différents équipements radio qui doivent participer à la surveillance d'un dispositif (détection, écoute, interception, balayage de fréquences, balayage de canaux prédéfinis, perturbations des signaux émis par des dispositifs dont le fonctionnement n'est pas autorisé) ou qui sont utilisés pour acheminer, router et relayer des données mesurées vers le module de traitement, une possibilité de prélever une partie des ressources temps/fréquences du réseau de radiocommunications pour supporter des services additionnels apparaissant au cours de fonctionnement du réseau de radiocommunications,

- un algorithme permet la programmation des ressources des unités les plus appropriées pour optimiser l'opération conjointe de fonctions de surveillance des émissions en provenance de dispositifs ou d'éléments et des fonctions de radiocommunications dans un réseau de communication sous contraintes de qualité de services QoS et de contrats de services SLA(Service Level Agreement: Contrat de qualité de services),
- un module permettant de déterminer les meilleures stratégies d'utilisation des capacités radio « 3 en 1 », l'entrelacement temporel, les bases de capteur (récepteurs) avec des géométries adaptées au traitement des données, proximité géographique, prise en compte du masquage lié au relief,
- un module de gestion optimale des informations radio ainsi que des nœuds réseaux pour des systèmes comportant plusieurs sous-réseaux reliés et communiquant entre eux par des nœuds et des protocoles connus de l'homme du métier.

L'architecture qui vient d'être décrite s'applique dans le cas de réseaux de transmission composés d'équipements radio interopérables, mêmes plans de fréquences, mêmes lois de sauts, mêmes éléments cryptographiques et mêmes motifs et protocole radio. Elle peut aussi être utilisée dans un réseau de réseaux de transmission, composé de plusieurs réseaux de transmission qui sont mis en réseau par des équipements ou nœuds assurant, notamment, des fonctions de routage, de transmission et d'adaptation techniques aux réseaux radio particuliers.

La mise en réseau et le séquencement de capacités ESP (écoute/surveillance/perturbations) sur des radios multifonctions permet d'amplifier l'effet et les performances du système, on peut écrire Perf(ESP)_{déploiement}=K.Perf(ESP)_{équipement}, Perf représente la performance d'un équipement ou du système avec K un coefficient dépendant de la stratégie de sélection des équipements, de leur topologie et des paramètres associés à une stratégie de type détection, perturbation de signaux, localisation d'un équipement ou d'analyse technique. Le choix de K peut aussi inclure une stratégie de sélection des bases et des relais de communication afin de minimiser les flux de transport et diminuer la latence de bout-en-bout des traitements.

Le dispositif maître va permettre de choisir les équipements radio « 3 en 1 » les plus appropriés, par exemple, les équipements radios qui sont proches d'une zone d'intérêt, les équipements radios adaptés à maximiser la longueur d'ouverture de la base angulaire dans le cas où l'on cherche à localiser un dispositif, à minimiser les besoins d'échanges occasionnés par de nouvelles chaînes opérationnelles, par exemple, de nouveaux services utilisables pour supporter une opération (services d'écoute, de surveillance, d'alertes sur détections d'activité radio), les équipements radios fonctionnels 10m et les équipements réseaux 10r (module de routage) permettant de trouver le meilleur chemin de routage des données obtenu par les équipements radio, mémorisées dans les équipements programmés pour la mémorisation et la transmission des données vers le dispositif maître, afin d'éviter les congestions des réseaux, de privilégier les liens hauts débits quand ils sont disponibles, et de paralléliser les échanges de données quand cela est possible. Chaque nœud du réseau est équipé des modules précités 10m et 10r.

Selon une variante de mise en œuvre de l'invention, le système est constitué de plusieurs réseaux de transmission qui sont mis en réseau par des nœuds ou équipements assurant, notamment, des fonctions de routage, transfert, et d'adaptation techniques aux réseaux radio particuliers. La mise en réseau et le séquencement de capacité « 3 en 1 » a notamment pour effet d'amplifier l'effet des performances d'écoute, la localisation, le brouillage, la gestion dynamique du spectre. L'amélioration peut aussi être réalisée par la mise en réseau des horloges locales équipant chaque équipement radio et la convergence vers un tel système. L'architecture selon l'invention permet aussi une synchronisation système de portions de réseau pour améliorer la précision des services de localisation de type différence de temps d'arrivée connu sous l'abréviation anglo-saxonne TDOA (Time Différence of Arrivai) et permet de paralléliser la disponibilité de ce type de services sans avoir à maintenir une synchronisation globale, beaucoup plus difficile à obtenir sur un réseau radio.

Selon une variante de réalisation, le système permet, sans connaissance a priori d'un contexte opérationnel, d'obtenir lors d'une première étape, une situation approximative d'une photographie de dispositifs à détecter, écouter, surveiller et localiser, présents dans une zone, puis de l'améliorer lors d'une seconde passe. Dans ce cas d'emploi, on effectue une première passe de recherche générale d'activité radio pour cartographier l'environnement radio. Cette cartographie est associée à une liste d'objectifs prioritaires qui permettra d'élaborer un plan détaillé de recherche dite « orientée » qui utilisera de façon optimisée et appropriée les ressources 3 en 1 disponibles du système. Des tâches jugées moins prioritaires que d'autres pourront éventuellement être abandonnées, afin de libérer des ressources au profit d'autres, jugées plus critiques.

Par exemple, lors de cette première étape, le dispositif maître 30 demande à certains équipements radio « 3 en 1 », 10i, de mesurer des signaux émis dans une bande de fréquence de largeur BW et pour plusieurs fréquences données F_{I}. Ces données sont ensuite enregistrées et mémorisées dans les équipements radio programmés pour le transfert des données vers le dispositif maître. Puis le dispositif maître va traiter ces informations afin de positionner un ou plusieurs dispositifs à surveiller, puis va choisir dans un second temps les équipements radios les plus appropriés pour détecter/localiser les signaux émis par un ou plusieurs dispositifs. L'optimisation se base sur des critères ciblés de topologie capteurs/dispositif surveillé, mais également sur des critères des performances du réseau de communication ainsi que d'impact sur les autres opérations « 3 en 1 » en cours d'exécution. La base d'équipements pourra être ainsi disposée au plus près des coordonnées géographiques de ou des émetteurs à localiser, son orientation Nord-Sud, Est-Ouest sera définie afin d'optimiser la détection de signaux, le nombre d'équipements utilisés sera choisi selon les critères d'efficacité propres à chaque service. Il est ainsi possible d'orienter la manœuvre adoptée pour améliorer les chaînes fonctionnelles détection, localisation, perturbation des signaux.

Selon une autre variante de réalisation, le système peut comporter un module permettant la correction des horloges « temps » des équipements radios. La correction système local est par exemple établie sur des portions du réseau, en choisissant un nombre d'équipements radio dans une zone géographique donnée, contenant au minimum les unités servant de base de capteurs dans le cas de localisations de type TDOA. Le fait de décomposer la zone géographique en plusieurs zones, permet avantageusement d'adapter la topologie de la zone à synchroniser à la base de capteurs. Le processus de correction des heures radio est de fait plus facile à réaliser quand le nombre de nœuds est réduit. Le processus de correction des heures radio sera plus facile à réaliser quand les communications entre capteurs, nécessaires au protocole de synchronisation réseau sont permanentes et fiables, quand le débit est élevé. Ceci est plus facile à obtenir sur des zones géographiques réduites. Il est aussi possible de paralléliser les corrections d'horloges sur plusieurs portions du réseau si nécessaire. Les horloges locales des équipements de chaque zone sont synchronisées entre elles, mais il n'y a pas d'obligation de synchroniser les zones entre elles, ni les équipements hors zone. Il est possible d'améliorer les performances du système par la mise en réseau des horloges locales et convergence vers un temps système.

Le système selon l'invention présente notamment comme avantage de déterminer, en fonction des zones d'intérêts précisées par un utilisateur, par exemple, le nombre d'équipements radios « 3 en 1 » et leurs positions les plus appropriées pour fournir les services demandés sans trop impacter les services de communication opérationnels existants dans le réseau de communication, ni impacter la mobilité du déploiement. Le système permet donc d'utiliser de manière dynamique des ressources en réseau en fonction de l'application, tout en minimisant des perturbations potentielles sur le réseau de communications opérationnel, d'optimiser l'utilisation des ressources sous contraintes, de paralléliser les opérations en fonction de la topologie des ressources et de la position géographique des dispositifs à détecter. Le système permet notamment d'offrir une utilisation dynamique de ressources radio individuelles à la fois sur le plan géographique, sur le plan spectral, en fonction d'une utilisation donnée.

L'architecture système selon l'invention permet notamment de sélectionner les unités les plus appropriées pour supporter les services, pour réaliser une optimisation sous contraintes multiples, de sélectionner l'unité la plus proche d'une zone d'intérêt, de sélectionner les meilleures topologies, le choix de bases de capteurs, d'ouverture angulaire dans le cas des services de localisation, de déterminer les meilleures stratégies d'utilisation des capacités « 3 en 1 », par exemple, l'entrelacement temporel, les bases de capteurs avec des géométries adaptées aux traitements de données, la capacité à acheminer des données recueillies vers une unité « maître » en minimisant les congestions réseaux, en minimisant les latences et les relayages réseaux pour économiser les ressources de communications.

## Revendications

1. Architecture système pour la gestion de ressources dans un réseau de communication ad-hoc militaire ou de sécurité comportant en combinaison au moins les éléments suivants :
• Plusieurs équipements radios programmées de façon logicielle (10i) travaillant avec un même plan de fréquences, des lois de sauts de fréquences identiques,
• Le dispositif maître (30) est adapté à gérer les fonctions « 3 en 1 » supplémentaires au réseau de communication desdits équipements radio (10i), une fonction « 3 en 1 » comprenant des services de communications, des services dérivés des capacités de réception/écoute de la radio et des services dérivés des capacités de l'émission de la radio,
ledit dispositif maître comprend un algorithme de gestion (317) des équipements adapté à programmer des ressources des unités adaptées à optimiser l'opération conjointe de fonctions de surveillance des émissions en provenance de dispositifs ou d'éléments et des fonctions de radiocommunications dans un réseau de communication sous contraintes de qualité de services QoS et de contrat de qualité de services,
• Un équipement radio (10i) comprend au moins deux des modules suivants:
• Un module logiciel pour assurer la mission principale de radio communication (11) qui supporte les échanges sur une chaîne de commandement, voix, données,
• Un module logiciel (12 ou 14) adapté à écouter, surveiller et intercepter les signaux radios de l'environnement et à les enregistrer localement dans une base de données (16), un module (13) adapté à perturber des communications non autorisées, un module de gestion locale « 3 en 1 », (15), recevant les ordres émis par le dispositif maître, le module de gestion étant adapté à piloter les différents modules de l'équipement radio,
• Un module logiciel routeur-radio (10r),
• Un module logiciel d'écoute et de surveillance (10m).

2. Architecture système selon la revendication 1 **caractérisée en ce qu'**un module routeur-radio (10r) comporte plusieurs modules fonctionnels, un module d'adaptation/transmission (21), un module de fiabilisation (22), un module de d'acheminement des données (23), un module de routage (24), un module de gestion locale (25) recevant des données à mémoriser puis à acheminer selon des critères et des contraintes vers le dispositif maître (30) pour le traitement des données.

3. Architecture système selon la revendication 1 **caractérisée en ce que** le module d'écoute et de surveillance (10m) comporte un module de radio communication (11) supportant les radiocommunications, un module (12, 14) adapté à écouter, surveiller et intercepter les signaux radios de l'environnement et à les enregistrer localement dans une base de données (16), un module (13) adapté à perturber des communications non autorisées, un module de gestion locale (15), recevant des ordres émis par le dispositif maître, le module de gestion étant adapté à piloter les différents modules de l'équipement radio.

4. Architecture système selon la revendication 1 **caractérisée en ce que** le dispositif maître (30) comporte :
• une base de données (310) comprenant des informations ou données de contraintes techniques et opérationnelles,
• une base de données (311) contenant des données géographiques de répartition des zones d'intérêts,
• une base de données « spectres d'intérêt », (312),
• une base de données contenant des données géographiques sur des positions géographiques de récepteurs, (313),
• une base de données contenant les topologies de réseaux de communication, (314),
• une base de données d'état des flux d'échanges, (316),
• un module de communication avec les équipements radio du système, (318).

5. Architecture système selon l'une des revendications précédentes **caractérisée en ce qu'**il comporte plusieurs réseaux de transmissions mis en réseau par des nœuds assurant des fonctions de routage, transfert, et d'adaptation techniques aux réseaux radio particuliers.

6. Architecture système selon l'une des revendications précédentes **caractérisée en ce qu'**un équipement radio (10i) comporte une horloge locale et **en ce que** les horloges locales des équipements présents dans le système sont mises en réseau afin de converger vers un temps système.

## Patentansprüche

1. Systemarchitektur für die Verwaltung von Ressourcen in einem militärischen oder Sicherheits-ad hoc-Kommunikationsnetzwerk, welches in Kombination mindestens folgende Elemente umfasst:
• mehrere softwaremäßig programmierte Funkgeräte (10i), welche mit dem gleichen Frequenzplan und mit identischen Frequenzsprung-Gesetzen arbeiten,
• die Mastervorrichtung (30) ist geeignet, die zusätzlichen "3-in-1"-Funktionen zum Kommunikationsnetzwerk der Funkgeräte (10i) zu verwalten, wobei eine "3-in-1"-Funktion Kommunikationsdienste, von den Empfangs-/Abhörkapazitäten des Funkgerätes abgeleitete Dienste und von den Sendekapazitäten des Funkgerätes abgeleitete Dienste umfasst,
wobei die Mastervorrichtung einen Verwaltungsalgorithmus (317) der Geräte umfasst, welcher geeignet ist, Ressourcen der Einheiten zu programmieren, welche geeignet sind, den gleichzeitigen Betrieb von Überwachungsfunktionen von Sendungen seitens Vorrichtungen oder Elementen und von Funkkommunikationsfunktionen in einem Kommunikationsnetzwerk unter Dienstgütevorgaben QoS und mit Dienstgütevertrag zu optimieren,
• ein Funkgerät (10i), umfasst mindestens zwei der folgenden Module:
• ein Softwaremodul zur Gewährleistung der Hauptaufgabe der Funkkommunikation (11), welches Austausche auf einem Voice-, Daten-, Dienstweg unterstützt,
• ein Softwaremodul (12 oder 14), welches geeignet ist, Funksignale aus der Umgebung abzuhören, zu überwachen und abzufangen und sie lokal in einer Datenbank (16) aufzuzeichnen, ein Modul (13), welches geeignet ist, nicht autorisierte Kommunikationen zu stören, ein Modul zur lokalen "3-in-1"-Verwaltung (15), welches die von der Mastervorrichtung gesendeten Befehle empfängt, wobei das Verwaltungsmodul geeignet ist, die unterschiedlichen Module des Funkgerätes zu steuern,
• ein Router-Funkgerät-Softwaremodul (10r),
• ein Abhör-und Überwachungs-Softwaremodul (10m).

2. Systemarchitektur nach Anspruch 1 **dadurch gekennzeichnet, dass** ein Router-Funkgerät-Modul (10r) mehrere Funktionsmodule umfasst, ein Anpassungs- /Übertragungsmodul (21), ein Absicherungsmodul (22), ein Datentransportmodul (23), ein Routing-Modul (24), ein lokales Verwaltungsmodul (25), welches zu speichernde Daten empfängt, welche anschließend gemäß Kriterien und Vorgaben an die Mastervorrichtung (30) zur Verarbeitung der Daten befördert werden sollen.

3. Systemarchitektur nach Anspruch 1, **dadurch gekennzeichnet, dass** das Abhör-und Überwachungsmodul (10m) ein Funkkommunikationsmodul (11) umfasst, welches die Funkkommunikationen unterstützt, ein Modul (12, 14), welches geeignet ist, Funksignale aus der Umgebung abzuhören, zu überwachen und abzufangen und sie lokal in einer Datenbank (16) aufzuzeichnen, ein Modul (13), welches geeignet ist, nicht autorisierte Kommunikationen zu stören, ein Modul zur lokalen Verwaltung (15), welches von der Mastervorrichtung gesendete Befehle empfängt, wobei das Verwaltungsmodul geeignet ist, die unterschiedlichen Module des Funkgerätes zu steuern,

4. Systemarchitektur nach Anspruch 1, **dadurch gekennzeichnet, dass** die Mastervorrichtung (30) Folgendes umfasst:
• eine Datenbank (310), welche Informationen oder Daten zu technischen und operativen Vorgaben umfasst,
• eine Datenbank (311), welche geografische Daten zur Verteilung der interessierenden Gebiete enthält,
• eine Datenbank "interessierende Spektren", (312),
• eine Datenbank, welche geografische Daten zu geographischen Positionen von Empfängern enthält, (313),
• eine Datenbank, welche die Topologien von Telekommunikationsnetzwerken enthält, (314),
• eine Datenbank mit Statusdaten der Austauschflüsse, (316),
• ein Modul zur Kommunikation mit den Funkgeräten des Systems, (318).

5. Systemarchitektur nach einem der vorhergehenden Ansprüche, **dadurch gekennzeichnet, dass** sie mehrere durch Knoten vernetzte Übertragungsnetzwerke umfasst, welche Routing-, Übertragungs- und technische Anpassungsfunktionen an die besonderen Funknetze ausführen.

6. Systemarchitektur nach einem der vorhergehenden Ansprüche, **dadurch gekennzeichnet, dass** ein Funkgerät (10i) eine lokale Uhr umfasst und dass die lokalen Uhren der in dem System vorhandenen Geräte vernetzt sind, um auf eine Systemzeit zu konvergieren.

## Claims

1. System architecture for managing resources in a communication network of military ad-hoc type or safety comprising in combination at least the following elements:
• several software programmed radio equipments (10i) working in a given frequency band and with identical frequency hopping rules,
• the master device (30) is adapted to manage the additional "3 in 1" functions to the communication network of said radio equipments (10i), a "3 in 1" function comprising communication services, services derived from radio reception/listening capabilities and services derived from radio transmission capabilities,
said master device comprises a management algorithm (317) of the equipment adapted to program resources of the units adapted to optimize conjoint operation of functions for monitoring transmissions, originating from devices or elements, and radiocommunication functions in a communication network under quality of service QoS and service level agreement constraints,
• a radio equipment (10i) comprises at least the two following modules:
• a software module to assure the main mission of radio communication (11) which supports the exchanges on the chain of command, voice, data,
• a software module (12 or 14) adapted for listening, monitoring and intercepting radio signals in the environment and for recording them locally in a database (16); a module (13) adapted for disrupting non-authorized communications; and a local "3 in 1" management module (15) receiving the orders emitted by the master device, the management module being adapted for controlling the various modules of the radio equipment;
• a software radio-router module (10r);
• a software listening and monitoring module (10m).

2. System architecture according to Claim 1, **characterized in that** a radio-router module (10r) comprises several functional modules,a matching/transmission module (21), a module (22) allowing transmission reliability to be increased, a data transfer module (23), a routing module (24), a local management module (25) receiving data to be stored and then transferred according to criteria and constraints to the master device (30) for data processing.

3. System architecture according to Claim 1, **characterized in that** the listening and monitoring module (10m) comprises a radiocommunication module (11) carrying the radiocommunications, a module (12, 14) adapted for listening, monitoring and intercepting radio signals in the environment and for recording them locally in a database (16), a module (13) adapted for disrupting non-authorized communications, and a local management module (15) receiving orders emitted by the master device, the management module being adapted for controlling the various modules of said radio equipment.

4. System architecture according to Claim 1, **characterized in that** the master device (30) comprises:
• a database (310) comprising information or data regarding operational and technical constraints;
• a database (311) containing geographical data relating to the distribution of the zones of interest;
• a "spectra of interest" database (312);
• a database containing geographical data regarding receiver geographical positions; (313)
• a database containing communication network topologies; (314)
• a database of exchange flow states; (316)
• a module (318) for communicating with the radio equipment of the system.

5. System architecture according to one of the preceding claims, **characterized in that** it comprises several transmission networks networked via nodes providing matching, transferring and routing technical functions to the particular radio networks.

6. System architecture according to one of the preceding claims, **characterized in that** a radio equipment (10i) comprises a local clock and **in that** the local clocks of the equipment present in the system are networked in order to converge to a system time.
